# EUROPEAN PATENT SPECIFICATION

(11) **EP 2 171 692 B1**
(45) Date of publication and mention of the grant of the patent: **04.04.2012**
(21) Application number: 08762224.7
(22) Date of filing: 30.05.2008
(51) Int. Cl.: G07C 5/08

(54) **IMPROVEMENTS IN AND RELATING TO ENGINE MONITORING**
VERBESSERUNGEN IN BEZUG AUF DIE MOTORÜBERWACHUNG
AMÉLIORATIONS DANS ET CONCERNANT LA SURVEILLANCE DE MOTEUR

(30) Priority: 01.06.2007 GB 0710524; 27.06.2007 GB 0712521
(43) Date of publication of application: 07.04.2010
(73) Proprietor: Lysanda Limited, Kelvedon Essex CO5 9BP (GB)
(72) Inventor: WILLARD, Alexander, Edward, Essex CM8 3GA (GB); HATIRIS, Emmanouil, Essex CM8 3GA (GB)
(74) Representative: Brookes Batchellor LLP
(86) International application number: PCT/GB2008/001870
(87) International publication number: WO 2008/146020

(56) References cited:
- WO-A-2007/030267
- US-A- 5 365 436
- US-A1- 2003 074 118
- US-A1- 2007 078 576

## Description

This invention relates to engine and vehicle monitoring and more specifically to a method and a device for extracting and identifying power train operating data from a vehicle on-board diagnostics port (OBD) for use by a vehicle monitoring device (VMD).

### Background

Communications between the engine controller of a motor vehicle and off-board devices are becoming more standardised. This is mainly due to the development of OBD II legislation in California, which has been propagated across the US and Europe and is now being taken on by many other countries. The legislation requires the support of certain standard communications protocols and also the provision of certain standard pieces of data by those protocols. This is intended to allow the vehicle service industry access to information from sensors and actuators on the vehicle such they can make effective and efficient repairs to vehicles. This information can also be accessed by any other monitoring device that might be fitted to the vehicle, and is not restricted to dealer service tools.

However, across the entire fleet of vehicles with differing engine types and configurations, there are relatively few truly "common" pieces of information (eg common parameters exist for engine rpm and engine coolant temperature). Therefore, in practice, many of the parameters are available only as "manufacturer specific" items. This includes not just the parameter identifier (PID), but also any scaling information that might be required to decode it.

### Statement of the Invention

A method for creating an accurate simulation or model of the performance of a vehicle or an internal combustion engine in accordance with the invention comprises accessing the engine on-board diagnostic port (OBD), reading data from the desired industry standard parameter indicators (PID), using these data to produce a basic simulation of the engine or vehicle operation, accessing and reading signals from the non-industry standard PIDs and using data from the basic simulation in order to identify the non-industry standard PIDs required to construct the accurate simulation.

As it may not be possible directly to identify some or all of the non-industry standard PIDs or their scale due to timing delays or coding, an additional feature of the invention is to prompt a driver of the vehicle to drive it in a certain way or to perform a certain operation of the engine in order to trigger an event that will assist in identifying a certain non-industry standard PID or will increase the degree of correlation or certainty in identifying the function or the scale of the required non-industry standard PID(s).

The data from some or all of the identified non-industry standard PID's can then be used to run an accurate simulation of the engine using data which can be retrieved over the OBD port, and without additional sensors, or the need to 'break into' vehicle control circuits which could produce mal-function or be dangerous. The resulting data may then be used to produce accurate real time fuel consumption data and/or accurate indications of CO₂, oxides of nitrogen, hydrocarbons and/or particulates emitted in the exhaust.

Data from the required PID's are preferably used to populate an array or matrix which can be subsequently extracted by the engine model to produce and maintain the accurate simulation of the engine performance in real time by using outputs partly or solely obtained from the industry standard PID's, for example, throttle opening, speed, engine speed, exhaust gas temperature, etc.. This permits the simulation to operate or continue to operate even when some or all of the non-industry standard PIDs are not available or are severely delayed due to a high level of activity by the on-board controller or otherwise.

As some data in the array may be missing from driving the vehicle in an *ad hoc* fashion, the device may be programmed to prompt a driver of a vehicle equipped with the device to drive the vehicle in a certain way or to perform a certain operation of the engine in order to trigger an event, such as to operate a turbo charger, or coast down hill, which will permit missing data in the array to be collected to complete the array.

On return to base, or if required by wireless transmission, fuel consumption and/or emissions may be output from the device to be monitored. In addition, a driver's performance may be monitored by highlighting fuel consumption under various load conditions, or by identifying rapid acceleration or hard braking, which can be extracted from the VMD by performing speed/time calculations. In addition, a signal indicating the arming of the vehicle's airbags (in advance of their being inflated) is available through the OBD port and can alert a vehicle operator to serious driver-related incidents.

The invention extends to a vehicle monitoring device comprising a processor programmed to simulate the operation of an internal combustion engine or vehicle both at a basic level and at an accurate level, an input connection to the processor adapted to connect to the on board diagnostics port (OBD) of the engine, means for interrogating the OBD to acquire data from signals identified byindustry-standard parameter indicators (PID) as required for the processor to be able to create and run a basic model of the engine or vehicle operation, and means for interrogating the OBD in order to acquire in real time the available signals identified by the non-industry standard PIDs, and processing means for analysing and comparing the signals identified by the non-industry standard PIDs with data from known parameters obtained from the basic model of engine operation in order to identify the non-industry standard PIDs with a degree of confidence so that their data can be used to produce the accurate model of the engine or vehicle operation in real time.

The device may be programmed to prompt a driver of a vehicle equipped with the device to drive the vehicle in a certain way or to perform a certain operation of the engine in order to trigger an event which will assist in identifying a certain non-industry standard PID or will increase the degree of correlation or certainty in identifying the function or the scale of the non-industry standard PID. The device can thus be programmed to correlate a number of identified desired non-industry standard PIDs with available industry standard PIDs in order to construct and operate an accurate model of the operation of the vehicle engine.

In order to permit the vehicle monitoring device to function properly even when the desired non-industry standard inputs are not available or too delayed to be of use for operating the model in real time, the non-industry standard PID inputs can be saved in an array or matrix referenced to the industry standard PID inputs. Thus accurate simulated PID readings for the vehicle monitoring device can be obtained or maintained in real time from the array based on data supplied by industry standard PIDs.

Over the life of a vehicle and its engine, engine management conditions will change. The device as programmed in accordance with the invention is intended to be left connected to the OBD port throughout the life of the vehicle. This allows the device to continue taking samples of data from the non-industry standard PIDs in order to update the array so that the model of vehicle operation remains accurate over its whole lifetime in spite of the changes to the vehicle and the engine, or even changes in fuel quality.

As the vehicle device is normally intended to be simple to fit and to remain in the vehicle over its lifetime, it is preferably provided with a standard OBD plug which plugs directly into the OBD port and replicates the original fitting so that the OBD port can be accessed as before by a garage or service centre as before without disconnecting the vehicle monitoring device.

An alternative version designed as a universal testing device is provided with a connection to the vehicle's OBD port or equivalent. In this case, or where the device is used on a fleet of similar vehicles, information about the non-industry standard PID(s) may be pre loaded or transferred to the data array to reduce the set-up time.

This invention overcomes the problem of unknown parameter identifiers and unknown scalings to allow the vehicle monitoring device to request parameter information from the on-board controller.

The invention is equally applicable to compression ignition or spark (or spark-assisted) ignition engines, as it is to cars, vans and trucks.

### Advantages

The system can eliminate the need to use manufacturer-specific tools to retrieve information from the sensors fitted to the engine/vehicle.

The system allows a single monitoring device/tool to be used on multiple vehicle/engine types from different manufacturers without the need to consult the detailed service information for each type and programme the monitoring device separately with the PID for each piece of data to be requested.

The system eliminates the need for the separate scaling information to be programmed into a monitoring device for each PID to be requested.

The system can identify when vehicle manufacturers have used alternative sensor arrangements and can identify the pertinent information required by a vehicle monitoring device.

It can be plugged directly into the standard OBD port without 'breaking into' the vehicle electronics (which in most countries is not permitted anyway), and leaves a replica of the original OBD port for servicing or normal testing and diagnostics.

### Applications

In one application of the invention, due to the increasing costs of fuel and other running costs, it has become advantageous for fleet operators to accurately monitor the fuel consumption of the vehicles within a fleet. The monitoring may be performed remotely - by the use of remote telemetry equipment or may be performed by relaying the information directly to the driver via a visual display unit.

In order to accurately determine fuel consumption in real time is advantageous to intercept the data pertaining to actual fuel quantity injected directly from the on-board engine control unit computer (ECU). Previous attempts to perform this task have involved 'breaking in' to the Controller Area Network. However, the data available on this older system may be insufficiently accurate for meaningful fuel consumption monitoring to be achieved.

In another example, the required PIDs are identified to permit a VMD to make an accurate real-time calculation of tail-pipe emissions, such as CO₂, particulates, and even NOX.

Equally, the data collected can be used to monitor and improve a driver's behaviour or a basis for instruction as to how to reduce fuel consumption by avoiding rapid acceleration and hard braking. In extreme circumstances frequent arming of the vehicle's airbag system is likely to indicate a dangerous driver allowing timely and appropriate action to be taken by a vehicle operator.

In another application the vehicle monitoring device can be set up as a universal vehicle testing deviceto be used with virtually any vehicle equipped with an OBD/OBDII port. The device may be supplied already with a range of known non-industry-standard PIDs already in a data array attached to the engine model. As the device is used increasingly the database will be expanded and it may not always be necessary to drive the vehicle to confirm the identity of all of the required parameters to test the engine or the vehicle.

### Detailed Description

The invention will now be described by way of example with reference to the accompanying drawings in which:
Figure 1 is a block diagram showing schematically the key units of a vehicle data bus and CAN network controller and the link with a vehicle monitoring device (VMD) in accordance with the invention;
Figure 2 is similar to Figure 1, but shows the VMD connected to a different arrangement of the vehicle data bus;
Figure 3is similar to Figure 2 but shows a different arrangement of the data array in the VMD; and
Figure 4 is a logic flow diagram showing the process in accordance with the invention to identify the various parameter identifiers (PIDs) needed to obtain the data required to produce the desired outputs.

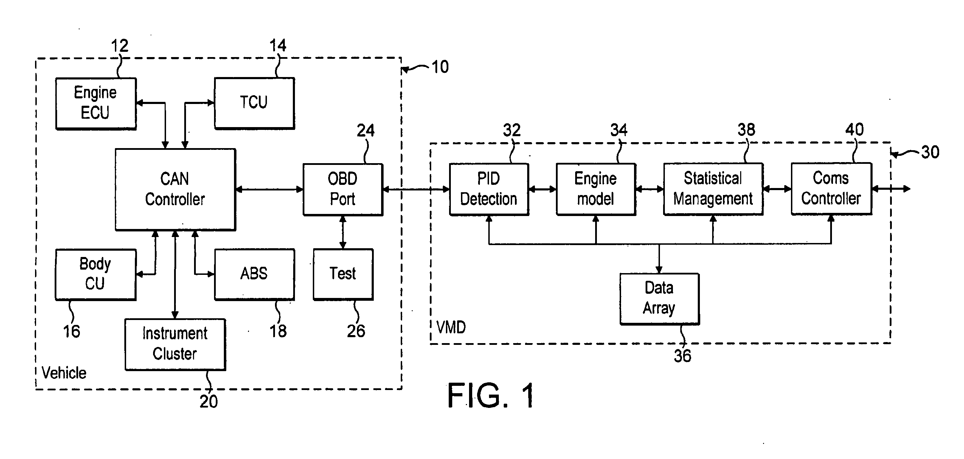

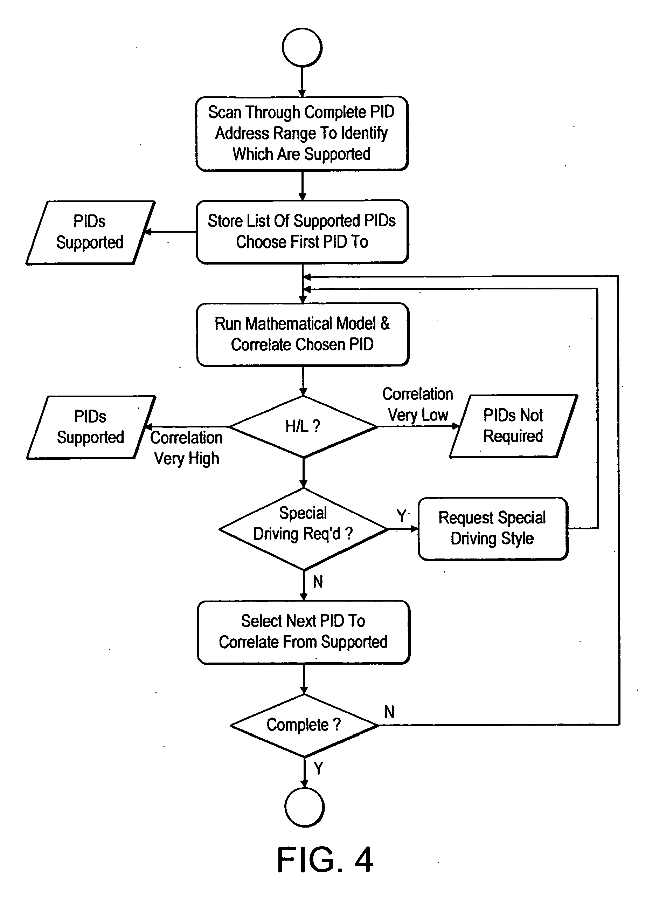

It should be noted that the block diagrams in Figures 1,2 and 3, and the logic flow diagram in Figure 4 are equally applicable to compression ignition or spark (or spark-assisted) ignition engines, as they are to cars, vans and trucks.

Referring to Figure 1 on the left hand side the block 10 indicated in broken lines represents equipment supplied with the vehicle and the vehicle data bus. Typically this includes an engine control unit (ECU) 12, a transmission control unit (TCU) 14, a body control unit (BodyCU) 16, ABS control unit 18 and an instrument cluster 20. These control units are connected to a network controller 22; in this example, a CAN network controller is used.

Although CAN network controllers are widely used in vehicles there are many other protocols and architectures that are used by vehicle manufacturers, and many of these are described in the Robert Bosch Automotive Handbook 97th Edition, July, 2007) published by Robert Bosch GmbH, Postfach 1129, D-73201 Plochingen, Germany; and English translation of the Handbook is distributed by John Wiley & Sons Ltd Chichester, England.

An on-board diagnostics (OBD) port 24 is provided giving access to the network controller 22 so that the required signals and industry standard parameters can be accessed for servicing and for diagnostics on the vehicle. Often manufacturers add other manufacturer-specific parameters which can be decoded by using their own diagnostic equipment. However a very wide range of signals and information can be accessed over the OBD port 24; the difficulty arises in identifying what they represent, decoding them and scaling them so as to be meaningful.

The purpose of the present invention is to present a method for identifying and scaling those signals that are useful and allow the various real-time calculations to be performed. The signals have to be identified with a high degree of probability, decoded and scaled so that they can be used reliably to produce an accurate model of the power train 12, 14 and vehicle performance.

In the invention, a vehicle monitoring device (VMD) 30 shown in broken lines is plugged into the OBD port 24 with a T-plug (not shown) leaving access to the OBD port for normal diagnostics and servicing by a test port 26.

The VMD 30 for convenience is broken down by function. It comprises a PID detection unit 32 linked to an engine model unit 34. As described below the engine model 34 interrogates the PID detection unit 32 for certain known parameters that use industry standard codes, such as engine speed, road speed, accelerator position, coolant temperature, etc.. These are used to construct an approximate model of the operation of the vehicle based on empirical data. The engine model then looks for specific, otherwise unobtainable, data which is coded. During a drive cycle or by simulation the engine model matches various signals from the vehicle controller network and assigns a degree of correlation and probability to various signals. This part of the process is managed by a statistical management unit 38 connected to the engine model.

Often, some of the required signals may not be available over the vehicle network, or may be severely delayed depending on the amount of activity of the vehicle network. Thus, so that the engine model 34 can continue to function accurately even when these data are not available, the engine populates an array of stored values in a data array 36 so that the values can be looked up if they are not available from the vehicle network.

The statistical management unit 38 may also be used to store fuel consumption and emissions statistics which can be read out on return to base or by wireless communication via a communications (coms) controller 40. Other statistical data or incident data may be stored in the unit 38, such as information relating to driver behaviour that can be deduced not only from fuel consumption and load data, but also from rapid acceleration or hard braking calculated from the vehicle speed/time relationship. Also pre-arming of the airbag circuits or safety system circuits including stability control can be recorded as this is directly available from the OBD port 24.

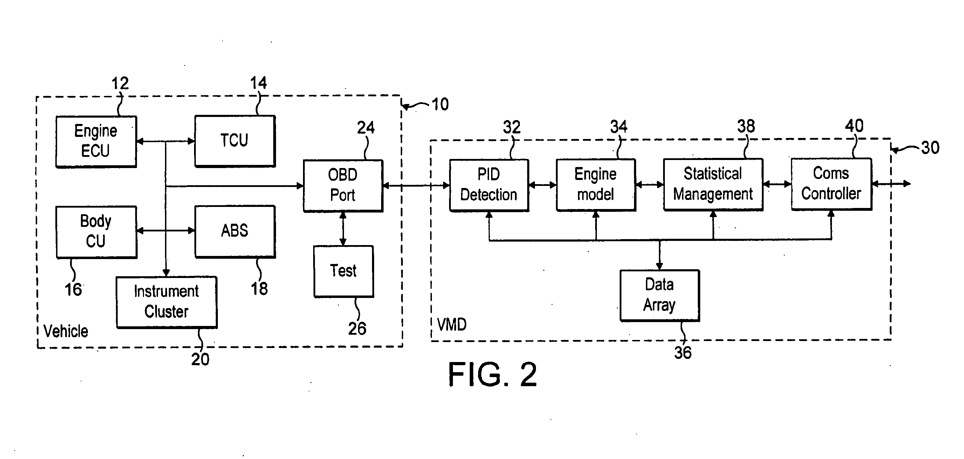

The VMD 30 shown in Figure 2 is identical to that shown in Figure 1, but the vehicle architecture 10 differs from that in Figure 1 in that a higher baud rate is obtained by direct connection between the various elements so that the 'speak' directly to each other and are programmed to recognise and respond to the data. The VMD 30 operates in a similar way to that in Figure 1, though the programming will need to be adapted accordingly.

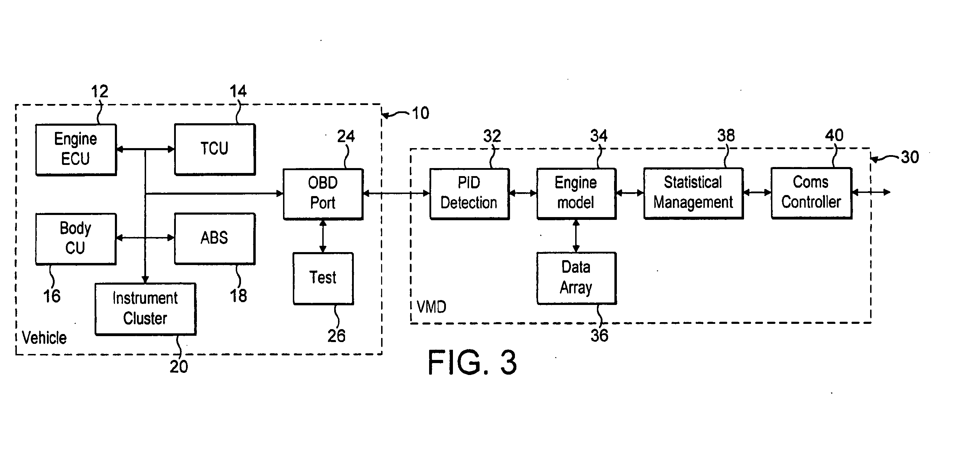

The vehicle architecture 10 shown in Figure 3 is similar to that in Figure 2, but the VMD 30 shows the data array 36 as being controlled solely and is accessible directly through the engine model. As a variant, it would be equally suitable in use with a CAN network controller 22 shown in Figure 1.

Recent OBD legislation requires vehicle manufacturers to make available sensor information from on-board the vehicle to allow the service industry to make efficient and effective repairs. This legislation has been primarily focused on engine emission control systems. This is done by the use of parameters which are sent over a standardised communications system between the on-board engine computer and an off-board tool or monitoring device, using a defined protocol (eg ISO-15031). These various parameters have to be requested by the off-board monitoring device by it requesting a certain parameter ID - PID.

There is a short standard list for the most common sensors (parameter data). This uses Mode 1 of the communications protocol which included the requirement for fixed scalings for these standard parameters. However, the majority of sensors/actuators used on many engines/vehicles do not fall into this category. These are known as manufacturer defined PIDs and are treated differently by the communications standard. The standard uses a separate mode (Mode 22) for the off-board tool/monitoring device to request the parameter by a simple Parameter ID (PID). The parameter ID (PID) must lie within a given address range, but beyond that, all details are left to the vehicle manufacturer, Therefore the manufacturer may use any PID within the range to represent any particular sensor's data and may scale that data in any way. Some PIDs are also used to represent state information and may therefore be bit-mapped rather than a representing a single piece of data.

The monitoring device/tool can be programmed to scan through the complete range of data and request each PID in turn to identify which PIDs are supported on this vehicle and what size of data is returned for each. Unsupported PIDs receive a fixed response according to the protocol. However there may still be a list of 50 or more support PIDs, from which the monitoring device/tool needs to identify the dozen or so pieces of data it requires. It is also common practice for manufacturers to use some of the PIDs to supply the same information as the standard Mode 1 PIDs, but perhaps in a higher resolution scaling.

The sequence used in order to achieve this is shown in the logic diagram in Figure 4. It involves the following steps:
i. statistically correlating received PID data with mathematical models of the engine and emissions systems.
ii. identifying when a particular sensor's data is being transmitted in response to one particular PID request within a range of possible PID requests.
iii. identifying the scaling of certain parameter data transmitted in response to a PID request, and
iv. requesting PID data in a certain order to build up a complete understanding of all PID data required by a vehicle monitoring device or tool.

The so-called 'scan tools' are capable of reading Mode 22 PIDs providing they know what to look for and have the sequences to hand. They cannot resolve the Mode 22 PIDs ab *initio*. However, this could be achieved by eves-dropping on the communications between the OBD port and the OEM diagnostics device.

The resulting PID data may be used to populate a table or matrix so that such data are available and can be accessed as required by the VMD. In the event that inadequate data is retrieved in order to populate the table or build up a complete understanding of the operation of the power-train, the device may be programmed to prompt the driver to operate the engine under various specific conditions in order to complete the table.

The system requests PIDs at regular intervals as the vehicle is driven. During this time, the system also runs a mathematical model of the engine, given the basic information from the Mode 1 PIDs to ensure that the model tries to emulate the same operation as the real engine. The model predicts the value of the PID that is being requested and the system compares the model with the PID value returned. The system attempts to statistically correlate the model data with the PID value to determine if this PID contains data from the sensor in question. A measure of confidence is built up over time. If the confidence measure becomes either extremely high or extremely low, then the PID is recognised as definitely the same or definitely different to the model value and therefore can be used or ignored.

There are various errors with the system which have to be taken into account by the statistics. The mathematical model itself is based on limited input data and therefore will have its own errors associated with the estimated parameter. The PID request/response takes a certain amount of time, therefore the parameter value received back at the tool/monitoring device may have errors as the model timesteps are not synchronised with the receipt of PID values. For these reasons, the statistical correlation will never be 100% perfect, hence the use of a confidence measure.

The PID scaling needs to be considered, as some manufacturers may scale the data differently. However, given the definition of the communications protocol and the knowledge of the physical range of the parameter in question, the system will have a limited number of possible scalings. They are also likely to vary in powers of 2, to fit the limited space in the Mode 22 message structure.

It is possible that a manufacture may make the same parameter data available with a different range/resolution/scaling. In this case if two PIDs are identified as potentially matching the parameter required by tool/monitoring device, then the one with the finer resolution will be selected.

The system continues in this way to identify the PIDs that are required. Once a PID has been recognised, then the system uses that parameter as part of the model and so the mathematical model is enhanced and its own errors reduced as the system recognises each PID. This is why the order in which PIDs are recognised can significantly enhance the timeliness and accuracy of the whole process.

As an alternative to allowing the vehicle to drive over random conditions, the tool/vehicle monitoring device may prompt the driver to operate the vehicle in a specific manner such that the recognition of (a) particular PID(s) may be speeded up. For example a long coast down, in gear, from high speed will exhibit different responses to normal driving patterns, similarly cold starting or steady speed or wide open throttle will all exhibit certain conditions which allow PIDs to be detected more efficiently.

We can also listen to the Controller Area Network (CAN) by going through the OBD system. The OBD is effectively 'powered' by the CAN. If on the other hand there is no OBD port available (and this includes the J1939 truck standard - a cut down version of OBD for heavy trucks)- then you need to break into the CAN. However all Euro 3 vehicles have some kind of available diagnostics system.

Some vehicles may use standards other than CAN which is a protocol and architecture originally developed for machine tools. However, in order to benefit from the invention you do not need to have access to the CAN; BMW and Porche, for example, use K-line (ISO 9041).

The mathematical engine models may be contained within the software of a vehicle monitoring device or alternatively may be within a separate tool.

## Claims

1. A vehicle monitoring device comprising a processor programmed to simulate the operation of an internal combustion engine or vehicle both at a basic level and a precise or accurate level, an input connection to the processor adapted to connect to the on board diagnostics port (OBD) of the engine, means for interrogating the OBD to acquire data from signals identified by industry-standard parameter indicators (PID) as required for the processor to be able to create and run a basic model of the engine or vehicle operation, and means for interrogating the OBD in order to acquire in real time the available signals identified by non-industry standard PIDs, and processing means for analysing and comparing the signals identified by the non-industry standard PIDs with signals obtained or derived from the basic model of engine operation in order to identify the non-industry standard PIDs with a degree of confidence and to permit their signals to be used to produce accurate simulation of the engine or vehicle operation.

2. A device as claimed in claim 1 which is programmed to prompt a driver of a vehicle equipped with the device to drive the vehicle in a certain way or to perform a certain operation of the engine or vehicle in order to trigger an event which will assist in identifying a certain non-industry standard PID or will increase the degree of correlation or certainty in identifying the function or the scale of the non-industry standard PID.

3. A device as claimed in claim 1 or claim 2 which is programmed to correlate a number of identified desired non-industry standard PIDs with available industry standard PIDs in order to construct an accurate model of the operation of the vehicle and/or its engine.

4. A device as claimed in claim 3 in which the signals identified by the non-industry standard PIDs to the accurate model are used to generate coefficients to populate an array with reference to the industry standard PID inputs so that the accurate coefficients can be obtained or deduced in real time from the signals from the industry standard PIDs if or when non-industry standard PID inputs are not available or too delayed to be of use.

5. A device as claimed in claim 4 which is programmed to prompt a driver of a vehicle equipped with the device to drive the vehicle in a certain way or to perform a certain operation of the engine in order to trigger an event which will permit missing data in the array to be collected to complete the array.

6. A device as claimed in any preceding claim which is provided with a plug for connection to the vehicle OBD port, and a port that replicates the vehicle OBD port so that servicing and maintenance of the vehicle can be carried out through the replicated port without removing the device.

7. A device as claimed in any preceding claim which is programmed to monitor some or all of the non-industry standard PIDs constantly or intermittently in order to permit accuracy of the accurate model and/or the array to be maintained or updated.

8. A device as claimed in any preceding claim which is programmed to interrogate the vehicle or engine network controller to retrieve certain signals or parameters to enable it to calculate, deduce or output fuel use directly

9. A device as claimed in any preceding claim which is programmed to interrogate the vehicle or engine network controller to retrieve certain parameters to enable it to create an accurate model of the vehicle or engine operation whence accurate data can be calculated or deduced relating to fuel consumption and/or emissions.

10. A device as claimed in any of claims 4 to 9 in which the data array is preprogrammed with known non-industry standard PID(s) or that these data are extracted from other vehicle monitoring devices and transferred to array.

11. A device as claimed in any preceding claim in which the device stores speed/time data enabling acceleration and braking rates to be calculated or retrieved.

12. A device as claimed in any preceding claim in which the device is programmed to identify the PID relating to arming of the vehicle's air bags or safety systems and records or stores each event.

13. A device as claimed in any preceding claim in which the device is self-standing and arranged for use as a universal engine testing device and programmed to recognise various vehicles and store their non-industry standard PIDs for reference and future use.

14. A method for creating an accurate simulation or model of the performance of an internal combustion engine comprising accessing the engine on-board diagnostic port (OBD), reading data from the desired industry standard parameter indicators (PID), using these data to produce a basic simulation of the engine or vehicle operation, accessing and reading signals from non-industry standard PID's and using data from the basic simulation to identify the non-industry standard PID's that are required to run the accurate simulation of the engine or vehicle operation.

15. A method as claimed in claim 14 in which a driver of a vehicle is prompted to drive the vehicle in a certain way or to perform a certain operation of the engine in order to trigger an event which will assist in identifying a certain non-industry standard PID or will increase the degree of correlation or certainty in identifying the function or the scale of the non-industry standard PID.

16. A method as claimed in claim 14 or 15 in which data from the identified non-industry standard PID's are used to run the accurate simulation of the engine.

17. A method as claimed in any one of claims 14 to 16 in which data from the required PID's are used to populate an array which can be used subsequently to produce the accurate simulation of the engine performance in real time by using outputs partly or solely from the industry standard PID's.

18. A method as claimed in claim 17 in which a driver of a vehicle equipped with the device is prompted to drive the vehicle in a certain way or to perform a certain operation of the engine in order to trigger an event which will permit missing data in the array to be collected to complete the array.

19. A method as claimed in any of claims 14 to 18 in which the device continuously or intermittently interrogates some or all of the non-industry standard PIDs to update their values as the vehicle operating conditions change over time.

## Patentansprüche

1. Fahrzeugüberwachungsvorrichtung mit einem Prozessor, der programmiert ist, um den Betrieb eines Verbrennungsmotors oder eines Fahrzeugs sowohl auf einem Basisniveau als auch auf einem präzisen oder akkuraten Niveau zu simulieren, einem Eingangsanschluss zu dem Prozessor, der zur Herstellung einer Verbindung mit dem Onboard-Diagnose-Port (OBD) des Motors geeignet ist, Einrichtungen zum Abfragen des OBD, um Daten aus Signalen zu erhalten, die durch Industriestandard-Parameterindikatoren (PID) als für den Prozessor zur Erstellung und zum Betreiben eines Basismodells des Motor- oder des Fahrzeugbetriebs erforderlich identifiziert sind, und Einrichtungen zum Abfragen des OBD, um in Echtzeit die durch Nicht-Industriestandard-PIDs identifizierten verfügbaren Signale zu erhalten, und einer Verarbeitungseinrichtung zum Analysieren und Vergleichen der durch die Nicht-Industriestandard-PIDs identifizierten Signale mit Signalen, die aus dem Basismodell des Motorbetriebs gewonnen oder abgeleitet sind, um die Nicht-Industriestandard-PIDs mit einem Zuverlässigkeitsgrad zu identifizieren und die Verwendung ihrer Signale bei der Erstellung einer akkuraten Simulation des Motor- oder Fahrzeugbetriebs zu ermöglichen.

2. Vorrichtung nach Anspruch 1, welche derart programmiert ist, dass sie den Fahrer eines mit der Vorrichtung ausgerüsteten Fahrzeugs auffordert, das Fahrzeug in einer bestimmten Weise zu fahren oder eine bestimmte Operation des Motors oder des Fahrzeugs durchzuführen, um ein Ereignis auszulösen, welches bei der Identifizierung eines bestimmten Nicht-Industriestandard-PID Hilfe leistet oder den Grad der Korrelation oder der Genauigkeit bei der Identifizierung der Funktion oder des Maßstabs des Nicht-Industriestandard-PID erhöht.

3. Vorrichtung nach Anspruch 1 oder 2, welche derart programmiert ist, dass sie eine Anzahl identifizierter erwünschter Nicht-Industriestandard-PIDs mit verfügbaren Industriestandard-PIDs korreliert, um ein akkurates Modell des Betriebs des Fahrzeugs und/oder dessen Motors zu konstruieren.

4. Vorrichtung nach Anspruch 3, bei welcher die von den Nicht-Industriestandard-PIDs identifizierten Signale für das akkurate Modell zur Erzeugung von Koeffizienten verwendet werden, um diese in ein Array in Bezug auf die Industriestandard-PID-Eingänge einzubringen, so dass die akkuraten Koeffizienten aus den Signalen der Industriestandard-PIDs in Echtzeit erhalten oder abgeleitet werden können, falls bzw. wenn Nicht-Industriestandard-PID-Eingänge nicht verfügbar oder für eine Nutzung zu verzögert sind.

5. Vorrichtung nach Anspruch 4, welche derart programmiert ist, dass sie den Fahrer eines mit der Vorrichtung ausgerüsteten Fahrzeugs auffordert, das Fahrzeug in einer bestimmten Weise zu fahren oder eine bestimmte Operation des Motors durchzuführen, um ein Ereignis auszulösen, das das Erfassen von in dem Array fehlenden Daten zur Vervollständigung des Arrays ermöglicht.

6. Vorrichtung nach einem der vorhergehenden Ansprüche, welche mit einem Stecker zum Anschluss an den Fahrzeug-OBD-Port und mit einem Port versehen ist, der den Fahrzeug-OBD-Port nachbildet, so dass Service- und Wartungsarbeiten an dem Fahrzeug über den nachgebildeten Port durchgeführt werden können, ohne die Vorrichtung zu entfernen.

7. Vorrichtung nach einem der vorhergehenden Ansprüche, welche derart programmiert ist, dass sie einige oder sämtliche Nicht-Industriestandard-PIDs kontinuierlich oder intermittierend überwacht, um das Aufrechterhalten oder Aktualisieren der Genauigkeit des akkuraten Modells und/oder des Arrays zu ermöglichen.

8. Vorrichtung nach einem der vorhergehenden Ansprüche, welche derart programmiert ist, dass sie die Fahrzeug- oder Motornetzwerksteuerung abfragt, um bestimmte Signale oder Parameter zu finden, die es ihr ermöglichen, den Kraftstoffverbrauch zu berechnen, abzuleiten oder direkt auszugeben.

9. Vorrichtung nach einem der vorhergehenden Ansprüche, welche derart programmiert ist, dass sie die Fahrzeug- oder Motornetzwerksteuerung abfragt, um bestimmte Signale oder Parameter zu finden, die es ihr ermöglichen, ein akkurates Modell des Fahrzeug- oder Motorbetriebs zu erstellen, aus welchem akkurate Daten bezüglich des Kraftstoffverbrauchs und/oder der Emissionen berechnet oder abgeleitet werden können.

10. Vorrichtung nach einem der Ansprüche 4 bis 9, bei welcher das Datenarray mit bekannten Nicht-Industriestandard-PID(s) vorprogrammiert ist, oder diese Daten aus anderen Fahrzeugüberwachungsvorrichtungen extrahiert und an das Array übertragen werden.

11. Vorrichtung nach einem der vorhergehenden Ansprüche, bei welcher die Vorrichtung Geschwindigkeits-/Zeitdaten speichert, die das Berechnen oder Auffinden von Beschleunigungs- und Bremsraten ermöglichen.

12. Vorrichtung nach einem der vorhergehenden Ansprüche, bei welcher die Vorrichtung derart programmiert ist, dass sie den PID bezüglich der Scharfschaltung der Airbags oder der Sicherheitssysteme des Fahrzeugs identifiziert und jedes Ereignis aufzeichnet oder speichert.

13. Vorrichtung nach einem der vorhergehenden Ansprüche, bei welcher die Vorrichtung eigenständig und zur Verwendung als universelle Motortestvorrichtung ausgebildet ist und derart programmiert ist, dass sie verschiedene Fahrzeuge erkennt und deren Nicht-Industriestandard-PIDs als Referenz und zur späteren Verwendung speichert.

14. Verfahren zum Erzeugen einer akkuraten Simulation oder eines Modells des Betriebs eines Verbrennungsmotors mit den Schritten des Zugreifens auf den Onboard-Diagnose-Port (OBD) des Motors, des Auslesens von Daten aus den gewünschten Industriestandard-Parameterindikatoren (PID), des Verwendens dieser Daten zur Erzeugung einer Grundsimulation des Motor- oder Fahrzeugbetriebs, des Zugreifens auf und des Auslesens von Signalen von Nicht-Industriestandard-PIDs, und des Verwendens von Daten der Grundsimulation zur Identifizierung der Nicht-Industriestandard-PIDs, die zum Durchführen der akkuraten Simulation des Motor- oder Fahrzeugbetriebs erforderlich sind.

15. Verfahren nach Anspruch 14, bei welchem ein Fahrer eines Fahrzeugs aufgefordert wird, das Fahrzeug in einer bestimmten Weise zu fahren oder eine bestimmte Operation des Motors oder des Fahrzeugs durchzuführen, um ein Ereignis auszulösen, welches bei der Identifizierung eines bestimmten Nicht-Industriestandard-PID Hilfe leistet oder den Grad der Korrelation oder der Genauigkeit bei der Identifizierung der Funktion oder des Maßstabs des Nicht-Industriestandard-PID erhöht.

16. Verfahren nach Anspruch 14 oder 15, bei welchem Daten der identifizierten Nicht-Industriestandard-PIDs zur Durchführung der akkuraten Simulation des Motors verwendet werden.

17. Verfahren nach einem der Ansprüche 14 bis 16, bei welchem Daten der erforderlichen PIDs verwendet werden, um in ein Array eingebracht zu werden, welche anschließend zur Erzeugung der akkuraten Simulation des Motorbetriebs in Echtzeit verwendet werden können, indem teileweise oder ausschließlich Ausgänge der Industrie-Standard-PIDs verwendet werden.

18. Verfahren nach Anspruch 17, bei welchem ein Fahrer eines mit der Vorrichtung ausgerüsteten Fahrzeugs aufgefordert wird, das Fahrzeug in einer bestimmten Weise zu fahren oder eine bestimmte Operation des Motors durchzuführen, um ein Ereignis auszulösen, das das Erfassen von in dem Array fehlenden Daten zur Vervollständigung des Arrays ermöglicht.

19. Verfahren nach einem der Ansprüche 14 bis 18, bei welcher die Vorrichtung einige oder sämtliche Nicht-Industriestandard-PIDs kontinuierlich oder intermittierend überwacht, um deren Werte aufgrund der sich mit der Zeit verändernden Fahrzeugbetriebsbedingungen zu aktualisieren.

## Revendications

1. Dispositif de surveillance d'un véhicule comportant un processeur programmé pour simuler le fonctionnement d'un moteur à combustion interne ou d'un véhicule, à la fois à un niveau de base et à un niveau exact ou précis, une connexion d'entrée au processeur étant adaptée en vue de se connecter au port du tableau de diagnostic (OBD) du moteur, des moyens pour interroger le dispositif OBD afin d'acquérir des données à partir des signaux identifiés par des indicateurs de paramètres de norme industrielle (PID), tels que requis pour que le processeur soit capable de créer et d'obtenir un modèle de base du fonctionnement du véhicule ou du moteur, et des moyens pour interroger le dispositif OBD afin d'acquérir en temps réel les signaux disponibles identifiés par les PID de norme non industrielle, et des moyens de traitement pour analyser et comparer les signaux identifiés par les PID de norme non industrielle avec les signaux obtenus ou déduits à partir du modèle de base de fonctionnement du moteur afin d' identifier les PID de norme non industrielle avec un degré de confiance et afin de permettre à leurs signaux d'être utilisés pour produire une simulation précise du fonctionnement du moteur ou du véhicule.

2. Dispositif selon la revendication 1, lequel est programmé pour inviter le conducteur d'un véhicule équipé du dispositif à conduire le véhicule d'une certaine manière ou pour réaliser un certain fonctionnement du moteur ou du véhicule afin de déclencher un événement qui aidera à identifier un certain PID de norme non industrielle ou qui augmentera le degré de corrélation ou de certitude dans l'identification de la fonction ou de l'échelle du PID de norme non industrielle.

3. Dispositif selon la revendication 1 ou la revendication 2, lequel est programmé pour corréler un certain nombre de PID identifiés de norme non industrielle souhaités avec les PID disponibles de norme industrielle afin de construire un modèle précis du fonctionnement du véhicule et/ou de son moteur.

4. Dispositif selon la revendication 3 dans lequel les signaux identifiés par les PID de norme non industrielle pour le modèle précis sont utilisés pour générer des coefficients afin de remplir une matrice en faisant référence aux entrées de PID de norme industrielle de telle sorte que les coefficients précis puissent être obtenus ou déduits en temps réel à partir des signaux provenant des PID de norme industrielle si, ou quand, des entrées de PID de norme non industrielle ne sont pas disponibles ou s'ils sont trop retardés pour être utilisés.

5. Dispositif selon la revendication 4, lequel est programmé pour inviter le conducteur d'un véhicule équipé avec le dispositif à conduire le véhicule d'une certaine manière ou à effectuer un certain fonctionnement du moteur afin de déclencher un événement qui permettra aux données manquantes dans la matrice d'être collectées en vue de compléter la matrice.

6. Dispositif selon l'une quelconque des revendications précédentes, lequel est doté d'une fiche permettant une connexion avec le port OBD du véhicule, et un port qui reproduit le port OBD du véhicule de sorte que l'entretien et la maintenance du véhicule peuvent être exécutés à travers le port reproduit sans retirer le dispositif.

7. Dispositif selon l'une quelconque des revendications précédentes, lequel est programmé pour surveiller une partie ou la totalité des PID de norme non industrielle en permanence ou de façon intermittente afin de permettre la justesse du modèle précis et/ou de la matrice à maintenir ou à actualiser.

8. Dispositif selon l'une quelconque des revendications précédentes, lequel est programmé pour interroger le contrôleur de réseau du véhicule ou du moteur afin de récupérer certains signaux ou paramètres afin de lui permettre de calculer, de déduire ou de délivrer directement la consommation de carburant.

9. Dispositif selon l'une quelconque des revendications précédentes, lequel est programmé pour interroger le contrôleur de réseau du véhicule ou du moteur afin de récupérer certains paramètres pour lui permettre de créer un modèle précis du fonctionnement du véhicule ou du moteur à partir de quoi des données précises peuvent être calculées ou déduites se rapportant à la consommation et/ou à des émissions de carburant.

10. Dispositif selon l'une quelconque des revendications 4 à 9, dans lequel la matrice de données est préprogrammée avec des PID connus de norme non industrielle ou en ce que ces données sont extraites à partir d'autres dispositifs de surveillance de véhicule et transférées à la matrice.

11. Dispositif selon l'une quelconque des revendications précédentes dans lequel le dispositif stocke des données de vitesse et de temps permettant aux taux d'accélération et de freinage d'être calculés ou récupérés.

12. Dispositif selon l'une quelconque des revendications précédentes dans lequel le dispositif est programmé pour identifier le PID concernant l'armement des airbags du véhicule ou des systèmes de sécurité et enregistre ou stocke chaque événement.

13. Dispositif selon l'une quelconque des revendications précédentes dans lequel le dispositif est autoporté et disposé en vue d'être utilisé en tant que dispositif universel de test de moteur et programmé pour reconnaître différents véhicules et stocker leurs PID de norme non industrielle en vue d'un usage de référence et à venir.

14. Procédé permettant de créer une simulation précise ou un modèle précis de la performance d'un moteur à combustion interne comportant le fait d'avoir accès au port de diagnostic embarqué d'un moteur (OBD), de lire des données à partir des indicateurs de paramètres souhaités de norme industrielle (PID), d'utiliser ces données pour produire une simulation de base du fonctionnement du moteur ou du véhicule, d'avoir accès aux, et d'extraire des, signaux à partir des PID de norme non industrielle et d'utiliser des données provenant de la simulation de base pour identifier les PID de norme non industrielle qui sont requis pour obtenir la simulation précise du fonctionnement du moteur ou du véhicule.

15. Procédé selon la revendication 14 dans lequel le conducteur d'un véhicule est invité à conduire le véhicule d'une certaine manière ou à effectuer un certain fonctionnement du moteur afin de déclencher un événement qui aidera à identifier un certain PID de norme non industrielle ou qui augmentera le degré de corrélation ou de certitude dans l'identification de la fonction ou de l'échelle du PID de norme non industrielle.

16. Procédé selon la revendication 14 ou 15, dans lequel des données provenant des PID identifiés de norme non industrielle sont utilisées pour obtenir la simulation précise du moteur.

17. Procédé selon l'une quelconque des revendications 14 à 16, dans lequel des données provenant des PID requis sont utilisées pour remplir une matrice qui peut être utilisée par la suite pour produire la simulation précise de la performance du moteur en temps réel en utilisant des sorties provenant partiellement ou seulement des PID de norme industrielle.

18. Procédé selon la revendication 17 dans lequel le conducteur d'un véhicule équipé du dispositif est invité à conduire le véhicule d'une certaine manière ou à exécuter un certain fonctionnement du moteur afin de déclencher un événement qui permettra aux données manquantes dans la matrice d'être collectées afin de compléter la matrice.

19. Procédé selon l'une quelconque des revendications 14 à 18 dans lequel le dispositif interroge de façon continue ou par intermittence une partie ou la totalité des PID de norme non industrielle afin d'actualiser leurs valeurs lorsque les conditions de fonctionnement du véhicule varient au cours du temps.
